(19) Europäisches Patentamt
European Patent Office
Office européen des brevets

(11) EP 4 438 644 B1

(12) EUROPEAN PATENT SPECIFICATION

(45) Date of publication and mention of the grant of the patent:
**27.05.2026 Bulletin 2026/22**

(21) Application number: **22948105.6**

(22) Date of filing: **22.11.2022**

(51) International Patent Classification (IPC):
***C08F 290/06*** *(2006.01)* ***C08F 222/10*** *(2006.01)*
***C08G 18/10*** *(2006.01)* ***C08G 18/44*** *(2006.01)*
***C08F 2/48*** *(2006.01)* ***C09D 151/08*** *(2006.01)*
***C08J 7/04*** *(2020.01)*

(52) Cooperative Patent Classification (CPC):
(C-Sets available)
**C08F 222/1065; C08F 290/067; C08G 18/246; C08G 18/44; C08G 18/672; C08G 18/722; C08G 18/73; C08G 18/755; C08J 7/04; C08J 7/0427; C09D 4/00; C09D 151/08; C09D 175/16;** C08J 2433/06; C08J 2475/04
(Cont.)

(86) International application number:
**PCT/KR2022/018499**

(87) International publication number:
**WO 2023/249171 (28.12.2023 Gazette 2023/52)**

(54) **PHOTOCURABLE COMPOSITION, COATING LAYER COMPRISING CURED PRODUCT THEREOF, AND PROCESS FILM**

LICHTHÄRTBARE ZUSAMMENSETZUNG, ÜBERZUGSSCHICHT MIT GEHÄRTETEM PRODUKT DARAUS UND PROZESSFILM

COMPOSITION PHOTODURCISSABLE, COUCHE DE REVÊTEMENT COMPRENANT UN PRODUIT DURCI À PARTIR DE CELLE-CI, ET FILM DE TRAITEMENT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **23.06.2022 KR 20220076697**

(43) Date of publication of application:
**02.10.2024 Bulletin 2024/40**

(73) Proprietor: **LG Chem, Ltd.**
**Yeongdeungpo-gu**
**Seoul 07336 (KR)**

(72) Inventors:
- **KIM, Sang Hwan**
**Daejeon 34122 (KR)**
- **KIM, Hyun Cheol**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**JP-A- 2013 209 487**
**JP-A- 2015 147 700**
**KR-A- 20130 073 353**
**KR-A- 20160 057 617**
**KR-A- 20190 007 069**
**KR-A- 20220 012 202**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 222/1065, C08F 222/102;**
**C08F 290/067, C08F 220/20, C08F 220/1811, C08F 220/301;**
**C09D 4/00, C08F 222/1065**

## Description

### Technical Field

The present specification claims the benefit of the filing date of Korean Patent Application No. 10-2022-0076697 filed with the Korean Intellectual Property Office on June 23, 2022.

The present disclosure relates to a photocurable composition, and a coating layer and a process film, including a cured product thereof.

### Background Art

A process film for processing an object is used in various fields such as a manufacturing process of an electronic control device and a manufacturing process of a display panel. In this case, the process film is required to have sufficient stress relaxation performance so as to protect the object from an impact generated in a process of processing the object.

Further, it may be exposed to heat in the process of processing the object, and accordingly, a process film having heat resistance that does not deform or is not damaged while maintaining stress relaxation performance even when exposed to heat is required.

Accordingly, there is a need for a technique capable of manufacturing a process film having excellent stress relaxation performance and heat resistance.

KR 2022-0012202 A discloses a photocurable composition comprising a urethane (meth)acrylate resin syrup comprising a urethane (meth)acrylate resin and a (meth)acrylate monomer mixture, which is a reaction product of a polyalkylene carbonate urethane prepolymer having an isocyanate terminal group and a (meth)acrylate compound containing a reactive group; a multifunctional urethane (meth)acrylate compound; and a multifunctional (meth)acrylate compound; wherein the urethane (meth)acrylate resin comprises a carbonate repeating unit containing an alkylene having 1 to 10 carbon atoms to which at least one side chain having 1 to 3 carbon atoms is bonded.

KR 2019-0007069 A discloses a quantum dot adhesive composition.

JP 2015 147700 A discloses a coated optical fiber having a coating layer of a single layer is provided in which the coating layer is formed by using a radiation-curable resin composition containing following components (A1), (A2), (B) and (C) (A1) urethane (meth)acrylate having structure derived from polycarbonate diol and a single (meth)acryloyl group (A2) urethane (meth)acrylate having structure derived from polycarbonate diol and two (meth)acryloyl groups (B) a compound having an ethylenically unsaturated group other than urethane (meth)acrylate (C) a radiation polymerization initiator.

## DISCLOSURE

### Technical Problem

The present disclosure provides a photocurable composition capable of implementing a coating layer having excellent coating properties and surface quality and excellent stress relaxation performance and heat resistance at the same time, a coating layer including a cured product of the photocurable composition, and a process film containing the coating layer.

However, the problem to be solved by the present disclosure is not limited to the above-mentioned problem, and other problems not mentioned will be clearly understood by those skilled in the art from the following description.

### Technical Solution

One embodiment of the present disclosure provides a photocurable composition including: a urethane (meth) acrylate-based resin syrup comprising a urethane (meth)acrylate-based resin that is a reaction product of a polyalkylene carbonate-based urethane prepolymer having an isocyanate end group and a reactive group-containing (meth)acrylate-based compound, and a (meth)acrylate-based monomer mixture; a multifunctional urethane (meth)acrylate-based compound; and a multifunctional (meth)acrylate-based compound, wherein the (meth)acrylate-based monomer mixture comprises an alkyl group-containing first (meth)acrylate-based monomer, an alicyclic alkyl group-containing second (meth)acrylate-based monomer, a polar functional group-containing third (meth)acrylate-based monomer, an aromatic group-containing fourth (meth)acrylate-based monomer, and a fifth (meth)acrylate-based monomer containing a polar functional group and an aromatic group the fourth (meth)acrylate-based monomer is contained in an amount of 15 parts by weight or more and 25 parts by weight or less based on 100 parts by weight of the urethane (meth)acrylate-based resin syrup, and the fifth (meth)acrylate-based monomer is contained in an amount of 5 parts by weight or more and 35 parts by weight or less based on 100 parts by weight of the urethane (meth)acrylate-based resin syrup.

Another embodiment of the present disclosure provides a coating layer including a cured product of the

photocurable composition.

Still another embodiment of the present disclosure provides a process film containing the coating layer.

## Advantageous Effects

The photocurable composition according to one embodiment of the present disclosure can implement a coating layer having excellent coating properties and excellent surface quality and thickness uniformity.

Further, it is possible to prepare a coating layer having excellent stress relaxation performance and heat resistance using the photocurable composition according to one embodiment of the present disclosure.

Further, the coating layer according to one embodiment of the present disclosure can be excellent in surface quality and thickness uniformity by having a low total thickness variation (TTV).

Further, the coating layer according to one embodiment of the present disclosure can be excellent in stress relaxation performance and heat resistance.

Further, the process film according to one embodiment of the present disclosure can be easily applied to processing processes in various fields such as electronic control devices, semiconductors, and display panels by having excellent stress relaxation performance and heat resistance.

Effects of the present disclosure are not limited to the above-mentioned effects, and effects not mentioned will be clearly understood by those skilled in the art from the present specification and accompanying drawings.

## Mode for Invention

Throughout the present specification, it is to be understood that when any part is referred to as "including" any component, it does not exclude other components, but may further include other components, unless specifically stated otherwise.

Throughout the present specification, when any member is referred to as being positioned "on" another member, it not only refers to a case where any member is in contact with another member, but also a case where still another member exists between the two members.

Throughout the present specification, the unit "parts by weight" may refer to the ratio of weight between respective components.

Throughout the present specification, "(meth) acrylate" is used as a generic term for acrylate and methacrylate.

Throughout the present specification, terms including ordinal numbers such as "first" and "second" are used for the purpose of distinguishing one component from another component, and the components are not limited by the ordinal numbers. For example, within the scope of the rights of the invention, a first component may also be referred to as a second component, and similarly, a second component may be referred to as a first component.

Throughout the present specification, a prepolymer may refer to a polymer in which some degree of polymerization has occurred between compounds, and may refer to a polymer capable of being additionally polymerized without reaching a completely polymerized state.

Throughout the present specification, the "weight average molecular weight" and "number average molecular weight" of a compound can be calculated using the molecular weight and molecular weight distribution of the compound. Specifically, a sample having a compound concentration of 1% by weight is prepared by putting tetrahydrofuran (THF) and a compound in a 50 ml glass bottle, a standard sample (polystyrene) and the sample are filtered through a filter with a pore size of 0.45 $\mu$m, and then the filtrate is injected into a GPC injector so that the molecular weight and molecular weight distribution of the compound may be obtained by comparing the elution time of the sample with the calibration curve of the standard sample. In this case, Infinity II 1260 (Agilient) may be used as a measuring instrument, the flow rate may be set to 1.00 mL/min, and the column temperature may be set to 35.0°C.

Throughout the present specification, the viscosity of a compound (or composition) may be a value measured with a Brookfield viscometer at the corresponding temperature. Specifically, after the compound (or composition) is debubbled into a bubble-free state, 0.5 mL of a sample is obtained using a 5 mL syringe, and while a constant temperature of the corresponding temperature (25°C) is maintained, the viscosity of the sample is measured with a Brookfield HB No. 40 spindle for 10 minutes to measure a cPs value at the time point of no change in viscosity.

Throughout the present specification, "alkyl group" may refer to one containing a chain-type hydrocarbon structure in which no unsaturated bond is present in a functional group. In addition, "alicyclic alkyl group" may refer to one which may contain a carbon ring structure in which an unsaturated bond is not present in a functional group, and which may include a monocyclic ring or a polycyclic ring.

Hereinafter, the present specification will be described in more detail.

One embodiment of the present disclosure provides a photocurable composition including: a urethane (meth) acrylate-based resin syrup comprising a urethane (meth)acrylate-based resin that is a reaction product of a polyalkylene carbonate-based urethane prepolymer having an isocyanate end group and a reactive group-containing (meth)acrylate-based compound, and a (meth)acrylate-based monomer mixture; a multifunctional urethane (meth)acrylate-based compound; and a multifunctional (meth)acrylate-based compound, wherein the (meth)acrylate-based monomer mixture comprises an alkyl group-containing first (meth)acrylate-based monomer, an alicyclic alkyl group-containing second (meth)acrylate-based monomer, a polar functional group-containing third (meth)acrylate-based monomer, an aromatic group-containing fourth (meth)acrylate-based monomer, and a fifth (meth)acrylate-based monomer containing a polar functional group and an aromatic group.

The photocurable composition according to one embodiment of the present disclosure may implement a coating layer having excellent coating properties and excellent surface quality and thickness uniformity. In addition, it may be possible to prepare a coating layer having excellent stress relaxation performance and heat resistance using the photocurable composition.

According to one embodiment of the present disclosure, the urethane (meth)acrylate-based resin syrup may comprise the urethane (meth)acrylate-based resin and the (meth)acrylate-based monomer mixture.

According to one embodiment of the present disclosure, the urethane (meth)acrylate-based resin may have a weight average molecular weight of 20,000 g/mol or more and 50,000 g/mol or less. Specifically, the urethane (meth) acrylate-based resin may have a weight average molecular weight of 20,000 g/mol or more and 47,000 g/mol or less, 20,000 g/mol or more and 45,000 g/mol or less, 20,000 g/mol or more and 42,000 g/mol or less, 20,000 g/mol or more and 40,000 g/mol or less, 20,000 g/mol or more and 38,000 g/mol or less, 20,000 g/mol or more and 35,000 g/mol or less, 20,000 g/mol or more and 33,000 g/mol or less, 20,000 g/mol or more and 31,000 g/mol or less, 25,000 g/mol or more and 50,000 g/mol or less, 26,000 g/mol or more and 48,000 g/mol or less, 27,000 g/mol or more and 45,000 g/mol or less, 28,000 g/mol or more and 40,000 g/mol or less, 29,000 g/mol or more and 38,000 g/mol or less, or 30,000 g/mol or more and 35,000 g/mol or less.

When the weight average molecular weight of the urethane (meth)acrylate-based resin is within the above-described range, the photocurable composition may implement a coating layer having improved stress relaxation performance, heat resistance, and mechanical properties. In addition, it may be possible to suppress a decrease in the coating properties of the photocurable composition by adjusting the weight average molecular weight of the urethane (meth)acrylate-based resin to the above-described range.

According to one embodiment of the present disclosure, the urethane (meth)acrylate-based resin syrup may have a viscosity of 500 cPs or more and 3,000 cPs or less. Specifically, the urethane (meth)acrylate-based resin syrup may have a viscosity at 25°C of 500 cPs or more and 3,000 cPs or less, 550 cPs or more and 2,800 cPs or less, 600 cPs or more and 2,700 cPs or less, 800 cPs or more and 2,500 cPs or less, 1,000 cPs or more and 2,200 cPs or less, 1,400 cPs or more and 2,000 cPs or less, 500 cPs or more and 1,500 cPs or less, or 2,000 cPs or more and 3,000 cPs or less. As described above, the viscosity at 25°C of the urethane (meth) acrylate-based resin syrup may be a value measured with a Brookfield HB No. 40 spindle.

When the viscosity at 25°C of the urethane (meth)acrylate-based resin syrup is within the above-described range, the coating properties of the photocurable composition may be effectively improved. In addition, it may be possible to improve the surface quality and thickness uniformity of the coating layer prepared of the photocurable composition by adjusting the viscosity of the urethane (meth)acrylate-based resin syrup to the above-described range. Specifically, it may be possible to more effectively reduce the total thickness variation (TTV) of the coating layer described later.

According to one embodiment of the present disclosure, the urethane (meth)acrylate-based resin may include a carbonate repeating unit containing an alkylene having 1 to 10 carbon atoms to which at least one side chain having 1 to 3 carbon atoms is bonded. The urethane (meth)acrylate-based resin includes a carbonate repeating unit containing an alkylene having 1 to 10 carbon atoms to which a side chain having 1 to 3 carbon atoms is bonded, and thus the urethane (meth)acrylate-based resin may have a high weight average molecular weight, and the urethane (meth)acrylate-based resin syrup may have a relatively low viscosity. Accordingly, the photocurable composition comprising the urethane (meth) acrylate-based resin syrup may have improved wetting properties to have excellent coating properties, and may improve the surface quality and thickness uniformity of the coating layer to be prepared. In addition, the photocurable composition may easily implement a coating layer having excellent stress relaxation performance and heat resistance.

According to one embodiment of the present disclosure, the polyalkylene carbonate-based urethane prepolymer may be a reaction product of a first mixture containing a polyalkylene carbonate-based polyol and a diisocyanate-based compound. Specifically, the polyalkylene carbonate-based urethane prepolymer may be formed through a polymerization reaction between a polyalkylene carbonate-based polyol and a diisocyanate-based compound. That is, as a reaction proceeds between an isocyanate group of the diisocyanate-based compound and a hydroxyl group of the polyalkylene carbonate-based polyol, a urethane bond may be formed, and a polyalkylene carbonate-based urethane prepolymer having an isocyanate group at the terminal thereof may be formed.

According to one embodiment of the present disclosure, the polyalkylene carbonate-based polyol may include a carbonate repeating unit containing an alkylene having 1 to 10 carbon atoms to which at least one side chain having 1 to 3 carbon atoms is bonded. That is, the carbonate repeating unit containing an alkylene having 1 to 10 carbon atoms to which at least one side chain having 1 to 3 carbon atoms is bonded, the carbonate repeating unit being included in the urethane

(meth)acrylate-based resin, may be derived from the polyalkylene carbonate-based polyol.

According to one embodiment of the present disclosure, the polyalkylene carbonate-based polyol may include one or more carbonate repeating units. Specifically, at least one of the carbonate repeating units included in the polyalkylene carbonate-based polyol may be a carbonate repeating unit containing an alkylene having 1 to 10 carbon atoms to which at least one side chain having 1 to 3 carbon atoms is bonded. The urethane (meth)acrylate-based resin syrup having a high weight average molecular weight and having a low viscosity may be prepared using the polyalkylene carbonate-based polyol including the above-described carbonate repeating units.

For example, the carbonate repeating unit containing an alkylene having 1 to 10 carbon atoms to which at least one side chain having 1 to 3 carbon atoms is bonded may be represented by Chemical Formula 2 below.

[Chemical Formula 2]

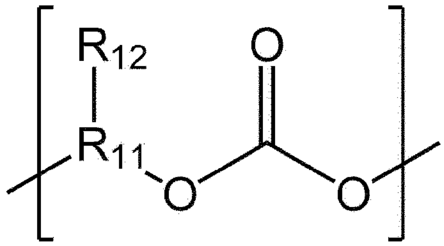

In Chemical Formula 2, $R_{11}$ is an alkylene having 1 to 10 carbon atoms, and $R_{12}$ is an alkyl group having 1 to 3 carbon atoms.

The alkylene having 1 to 10 carbon atoms contained in the carbonate repeating unit may be linear. In addition, the number of carbon atoms of the alkylene contained in the carbonate repeating unit may be 3 to 8, 5 to 6, or 4 to 5. In addition, at least one alkyl group having 1 to 3 carbon atoms may be bonded to the main chain of the alkylene. Specifically, a methyl group, an ethyl group, or a propyl group may be bonded to the alkylene. More specifically, the carbonate repeating unit may contain an alkylene having 4 to 6 carbon atoms to which a methyl group is bonded. When the number of carbon atoms of the alkylene contained in the carbonate repeating unit and the number of carbon atoms of the side chain are within the above-described ranges, the urethane (meth)acrylate-based resin syrup may have a low viscosity while having a high weight average molecular weight.

Further, the polyalkylene carbonate-based polyol may contain two or more hydroxyl groups. Specifically, the polyalkylene carbonate-based polyol may be a polyalkylene carbonate-based diol including the above-described carbonate repeating unit.

According to one embodiment of the present disclosure, the diisocyanate-based compound may include at least one of bis(isocyanatomethyl)cyclohexane, methylene diphenyl diisocyanate, toluene diisocyanate, hexamethylene diisocyanate, isophorone diisocyanate, meta-Xylylene diisocyanate, dicyclohexylmethane diisocyanate, and tetramethyl xylene diisocyanate. However, the types of the diisocyanate-based compound are not limited to the above-described ones.

According to one embodiment of the present disclosure, the diisocyanate-based compound may include two or more diisocyanate-based compounds. Specifically, the diisocyanate-based compound may include a chain-type alkylene diisocyanate-based compound and an alicyclic-type alkylene diisocyanate-based compound. For example, the chain-type alkylene diisocyanate-based compound may be isophorone diisocyanate, and the alicyclic-type alkylene diisocyanate-based compound may be hexamethylene diisocyanate. The urethane (meth)acrylate-based resin syrup having a low viscosity while having a high weight average molecular weight may be formed effectively by using the diisocyanate-based compound including a chain-type alkylene diisocyanate-based compound and an alicyclic-type alkylene diisocyanate-based compound.

According to one embodiment of the present disclosure, the diisocyanate-based compound contained in the first mixture may be contained in an amount of 10 parts by weight or more and 20 parts by weight or less based on 100 parts by weight of the polyalkylene carbonate-based polyol. Specifically, the diisocyanate-based compound may be contained in an amount of 11.5 parts by weight or more and 18 parts by weight or less, 12.5 parts by weight or more and 16 parts by weight or less, 10 parts by weight or more and 15 parts by weight or less, or 14 parts by weight or more and 18 parts by weight or less based on 100 parts by weight of the polyalkylene carbonate-based polyol. When the diisocyanate-based compound is contained within the above-described amount range, the polyalkylene carbonate-based urethane prepolymer may be stably formed. In addition, the urethane (meth)acrylate-based resin syrup having a low viscosity while having a high weight average molecular weight may be effectively formed by adjusting the content of the diisocyanate-based compound to the above-described range.

According to one embodiment of the present disclosure, the polyalkylene carbonate-based polyol and the

diisocyanate-based compound may have a molar ratio of 1:1.15 to 1:1.5. Specifically, the polyalkylene carbonate-based polyol and the diisocyanate-based compound may have a molar ratio of 1:1.15 to 1:1.4, 1:1.15 to 1:1.3, 1:1.15 to 1:1.2, 1:1.2 to 1:1.5, 1:1.3 to 1:1.5, or 1:1.4 to 1:1.5. By adjusting the molar ratio of the polyalkylene carbonate-based polyol and the diisocyanate-based compound to the above-described range, the viscosity and molecular weight of the urethane (meth)acrylate-based resin may be appropriately controlled to effectively improve stress relaxation properties and heat resistance of the stress relaxation layer.

According to one embodiment of the present disclosure, the first mixture may contain a monomer for viscosity adjustment. The polyalkylene carbonate-based urethane prepolymer may have an appropriate viscosity by adding a monomer for viscosity adjustment to the first mixture. The polyalkylene carbonate-based urethane prepolymer may be easily polymerized with the reactive group-containing (meth)acrylate-based compound by adjusting the viscosity of the polyalkylene carbonate-based urethane prepolymer using a monomer for viscosity adjustment.

The monomer for viscosity adjustment may include at least one of isobornyl (meth)acrylate, cyclohexyl (meth) acrylate, t-butylcyclohexyl (meth)acrylate, and trimethylcyclohexyl (meth)acrylate. Meanwhile, the monomer for viscosity adjustment contained in the first mixture may be one which remains in the urethane (meth)acrylate-based resin syrup and is contained in a (meth)acrylate-based monomer mixture to be described later. Specifically, the monomer for viscosity adjustment contained in the first mixture may constitute a part of an alicyclic alkyl group-containing second (meth)acrylate-based monomer contained in the urethane (meth)acrylate-based resin syrup. That is, the monomer for viscosity adjustment contained in the first mixture remains in the urethane (meth)acrylate-based resin syrup and thus may easily adjust the viscosity of the urethane (meth)acrylate-based resin syrup to the above-described range.

According to one embodiment of the present disclosure, the urethane (meth)acrylate-based resin may be a reaction product of a second mixture containing a polyalkylene carbonate-based urethane prepolymer having an isocyanate end group and a reactive group-containing (meth)acrylate-based compound. That is, the urethane (meth) acrylate-based resin may be formed through a polymerization reaction between the polyalkylene carbonate-based urethane prepolymer and the reactive group-containing (meth)acrylate-based compound. Specifically, a reaction proceeds between the isocyanate group located at an end of the polyalkylene carbonate-based urethane prepolymer and the reactive group of the reactive group-containing (meth)acrylate-based compound so that the urethane (meth)acrylate-based resin may be formed. Through this, the end of the urethane (meth)acrylate-based resin may be acrylated with the reactive group-containing (meth)acrylate-based compound and capped. In addition, the second mixture may contain a monomer for viscosity adjustment, and the monomer for viscosity adjustment contained in the second mixture may be one in which the monomer for viscosity adjustment contained in the first mixture remains.

According to one embodiment of the present disclosure, the reactive group of the reactive group-containing (meth)acrylate-based compound may include a hydroxy group (-OH). A (meth)acrylate-based compound containing a hydroxyl group as a reactive group may be used in terms of polymerization reactivity with an isocyanate group located at the end of the polyalkylene carbonate-based urethane prepolymer. The (meth)acrylate-based compound containing a hydroxy group as a reactive group may react with the isocyanate group located at the end of the polyalkylene carbonate-based urethane prepolymer to form a urethane bond. The urethane (meth)acrylate-based resin may have a fast curing rate with respect to UV, and a cured product of a photocurable composition comprising the urethane (meth)acrylate-based resin syrup may have excellent stress relaxation performance.

According to one embodiment of the present disclosure, the reactive group-containing (meth)acrylate-based compound may not contain a carboxyl group. That is, the reactive group-containing (meth)acrylate-based compound may not contain a carboxyl group as a reactive group. When the reactive group-containing (meth)acrylate-based compound contains a carboxyl group as a reactive group, the reactivity with the isocyanate group located at the end of the polyalkylene carbonate-based urethane prepolymer is not good so that it may not be easy to form the urethane (meth)acrylate-based resin. In addition, when the reactive group-containing (meth)acrylate-based compound contains a carboxyl group, there may occur a problem that stress relaxation performance of the cured product of the photocurable composition deteriorates.

Therefore, according to one embodiment of the present disclosure, the urethane (meth)acrylate-based resin may be easily formed using a (meth)acrylate-based compound that does not contain a carboxyl group as a reactive group. In addition, a photocurable composition capable of forming a coating layer having excellent stress relaxation performance may be provided.

According to one embodiment of the present disclosure, the reactive group-containing (meth)acrylate-based compound may contain an alkylene having 4 or less carbon atoms. Specifically, the reactive group-containing (meth) acrylate-based compound may include at least one of hydroxymethyl (meth)acrylate, hydroxyethyl (meth)acrylate, hydroxypropyl (meth)acrylate, and hydroxybutyl (meth)acrylate. The photocurable composition comprising a reactive group-containing (meth)acrylate-based compound having an alkylene having 4 or less carbon atoms and the urethane (meth)acrylate-based resin derived from the polyalkylene carbonate-based urethane prepolymer may implement a coating layer having excellent coating properties, surface quality and thickness uniformity, and excellent stress relaxation performance and heat resistance.

According to one embodiment of the present disclosure, the reactive group-containing (meth)acrylate-based compound contained in the second mixture may be contained in an amount of 1 part by weight or more and 10 parts by weight or less based on 100 parts by weight of the polyalkylene carbonate-based urethane prepolymer. Specifically, the reactive group-containing (meth)acrylate-based compound may be contained in an amount of 1.5 parts by weight or more and 8.5 parts by weight or less, 2 parts by weight or more and 7 parts by weight or less, 3.5 parts by weight or more and 6.5 parts by weight or less, 1 part by weight or more and 6 parts by weight or less, 1.5 parts by weight or more and 5.5 parts by weight or less, 2 parts by weight or more and 5 parts by weight or less, 2 parts by weight or more and 4.5 parts by weight or less, 3 parts by weight or more and 10 parts by weight or less, 3.2 parts by weight or more and 8.5 parts by weight or less, 3.5 parts by weight or more and 7.5 parts by weight or less, 3.7 parts by weight or more and 7 parts by weight or less, or 4 parts by weight or more and 6.5 parts by weight or less based on 100 parts by weight of the polyalkylene carbonate-based urethane prepolymer.

The stress relaxation performance and mechanical properties of the coating layer including the cured product of the photocurable composition may be further improved by adjusting the content of the reactive group-containing (meth) acrylate-based compound to the above-described range. In addition, when the content of the reactive group-containing (meth)acrylate-based compound is within the above-described range, it may be possible to suppress a decrease in the coating properties of the photocurable composition.

According to one embodiment of the present disclosure, the urethane (meth)acrylate-based resin may be contained in an amount of 15 parts by weight or more and 35 parts by weight or less, 17.5 parts by weight or more and 32.5 parts by weight or less, 20 parts by weight or more and 30 parts by weight or less, 23 parts by weight or more and 28 parts by weight or less, 15 parts by weight or more and 30 parts by weight or less, 18 parts by weight or more and 28.5 parts by weight or less, 20 parts by weight or more and 25 parts by weight or less, 20 parts by weight or more and 35 parts by weight or less, 21.5 parts by weight or more and 33 parts by weight or less, 22.5 parts by weight or more and 30 parts by weight or less, or 25 parts by weight or more and 27.5 parts by weight or less based on 100 parts by weight of the urethane (meth) acrylate-based resin syrup. When the content of the urethane (meth)acrylate-based resin is within the above-described range, the photocurable composition may provide a coating layer having excellent surface quality and thickness uniformity. In addition, the stress relaxation performance and heat resistance of the coating layer may be further improved by adjusting the content of the urethane (meth)acrylate-based resin to the above-described range.

According to one embodiment of the present disclosure, the urethane (meth)acrylate-based resin syrup may comprise a (meth)acrylate-based monomer mixture. The (meth)acrylate-based monomer mixture may adjust the viscosity of the urethane (meth)acrylate-based resin syrup and also participate in a photocuring reaction of the photocurable composition described later.

According to one embodiment of the present disclosure, the (meth)acrylate-based monomer mixture may be contained in an amount of 65 parts by weight or more and 85 parts by weight or less based on 100 parts by weight of the urethane (meth)acrylate-based resin syrup. Specifically, the (meth)acrylate-based monomer mixture may be contained in an amount of 67.5 parts by weight or more and 82.5 parts by weight or less, 70 parts by weight or more and 80 parts by weight or less, 72.5 parts by weight or more and 77.5 parts by weight or less, 65 parts by weight or more and 80 parts by weight or less, 68 parts by weight or more and 77 parts by weight or less, or 70 parts by weight or more and 75 parts by weight or less based on 100 parts by weight of the urethane (meth)acrylate-based resin syrup.

The viscosity of the urethane (meth)acrylate-based resin syrup may be easily adjusted to the above-described range by adjusting the content of the (meth)acrylate-based monomer mixture to the above-described range. In addition, when the content of the (meth)acrylate-based monomer mixture satisfies the above-described range, the coating properties of the photocurable composition may be improved, and the surface quality and thickness uniformity of the coating layer prepared using the photocurable composition may be effectively improved.

According to one embodiment of the present disclosure, the (meth)acrylate-based monomer mixture may contain: an alkyl group-containing first (meth)acrylate-based monomer; an alicyclic alkyl group-containing second (meth) acrylate-based monomer; a polar functional group-containing third (meth)acrylate-based monomer; an aromatic group-containing fourth (meth)acrylate-based monomer; and a fifth (meth)acrylate-based monomer containing a polar functional group and an aromatic group.

According to one embodiment of the present disclosure, the first (meth)acrylate-based monomer may contain a linear or branched chain-type alkyl group having 1 to 10 carbon atoms. For example, the alkyl group-containing first (meth) acrylate-based monomer may include at least one of methyl (meth)acrylate, ethyl (meth)acrylate, n-propyl (meth)acrylate, isopropyl (meth)acrylate, n-butyl (meth)acrylate, t-butyl (meth)acrylate, sec-butyl (meth)acrylate, pentyl (meth)acrylate, 2-ethylhexyl (meth)acrylate, 2-ethylbutyl (meth)acrylate, n-octyl-5-(meth)acrylate, and isooctyl (meth)acrylate.

According to one embodiment of the present disclosure, the first (meth)acrylate-based monomer may be contained in an amount of 2.5 parts by weight or more and 7.5 parts by weight or less, 3.5 parts by weight or more and 6.5 parts by weight or less, 4.5 parts by weight or more and 5.5 parts by weight or less, 2.5 parts by weight or more and 5 parts by weight or less, or 4.5 parts by weight or more and 7.5 parts by weight or less based on 100 parts by weight of the urethane (meth)acrylate-based resin syrup. By adjusting the content of the alkyl group-containing first (meth)acrylate-based monomer to the above-described range, it may be possible to appropriately adjust the viscosity of the photocurable composition to improve wetting properties thereof, and to more uniformly and flatly form the coating surface. In addition, when the content of the alkyl group-containing (meth)acrylate-based monomer is within the above-described range, the mechanical properties and stress relaxation properties of the coating layer including the cured product of the photocurable composition may be improved.

According to one embodiment of the present disclosure, the second (meth)acrylate-based monomer may contain an alicyclic alkyl group having 5 to 10 carbon atoms. For example, the alicyclic alkyl group-containing second (meth) acrylate-based monomer may include at least one of isobornyl (meth)acrylate, cyclohexyl (meth)acrylate, t-butylcyclohexyl (meth)acrylate, and trimethylcyclohexyl (meth)acrylate.

According to one embodiment of the present disclosure, the second (meth)acrylate-based monomer may be contained in an amount of 5 parts by weight or more and 35 parts by weight or less, 10 parts by weight or more and 30 parts by weight or less, 15 parts by weight or more and 25 parts by weight or less, 5 parts by weight or more and 20 parts by weight or less, or 15 parts by weight or more and 35 parts by weight or less based on 100 parts by weight of the urethane (meth) acrylate-based resin syrup. By adjusting the content of the alicyclic alkyl group-containing (meth)acrylate-based monomer to the above-described range, it may be possible to adjust the viscosity of the photocurable composition to effectively improve the coating properties thereof, and to improve the mechanical properties of the coating layer.

Meanwhile, the alicyclic alkyl group-containing second (meth)acrylate-based monomer contained in the (meth) acrylate-based monomer mixture may be a monomer for viscosity adjustment contained in the first mixture as described above. That is, the alicyclic alkyl group-containing second (meth)acrylate-based monomer contained in the (meth) acrylate-based monomer mixture may be one in which the monomer for viscosity adjustment contained in the first mixture remains in the photocurable composition. Therefore, when the content of the alicyclic alkyl group-containing second (meth)acrylate-based monomer is within the above-described range, the polyalkylene carbonate-based urethane prepolymer may be easily prepared, and the polymerization of the polyalkylene carbonate-based urethane prepolymer and the reactive group-containing (meth)acrylate-based compound may be easily performed.

According to one embodiment of the present disclosure, the polar functional group-containing third (meth) acrylate-based monomer may contain a hydroxy group as a polar functional group. Specifically, the polar functional group-containing third (meth)acrylate-based monomer may include at least one of 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 2-hydroxyethyleneglycol (meth)acrylate, and 2-hydroxypropyleneglycol (meth)acrylate.

According to one embodiment of the present disclosure, the polar functional group-containing third (meth) acrylate-based monomer may be contained in an amount of 5 parts by weight or more and 15 parts by weight or less, 7.5 parts by weight or more and 12.5 parts by weight or less, 5 parts by weight or more and 10 parts by weight or less, or 8 parts by weight or more and 15 parts by weight or less based on 100 parts by weight of the urethane (meth)acrylate-based resin syrup. By adjusting the content of the polar functional group-containing third (meth)acrylate-based monomer to the above-described range, it may be possible to improve the wetting properties and coating properties of the photocurable composition, and to improve the stress relaxation performance and heat resistance of the cured product of the photocurable composition.

According to one embodiment of the present disclosure, the aromatic group-containing fourth (meth)acrylate-based monomer may contain an aromatic group having 6 to 20 carbon atoms. For example, the aromatic group-containing fourth (meth)acrylate-based monomer may include at least one of phenylbenzyl (meth)acrylate, phenylthioethyl (meth) acrylate, O-phenylphenoxyethyl (meth)acrylate, and naphthylthioethyl (meth) acrylate.

The aromatic group-containing fourth (meth) acrylate-based monomer is contained in an amount of 15 parts by weight or more and 25 parts by weight or less, or may be contained in an amount of17.5 parts by weight or more and 22.5 parts by weight or less, 15 parts by weight or more and 22 parts by weight or less, or 18 parts by weight or more and 25 parts by weight or less based on 100 parts by weight of the urethane (meth)acrylate-based resin syrup. When the content of the aromatic group-containing fourth (meth)acrylate-based monomer is within the above-described range, the wetting properties of the photocurable composition may be improved, and the stress relaxation performance and heat resistance of the cured product of the photocurable composition may be improved.

According to one embodiment of the present disclosure, the fifth (meth)acrylate-based monomer containing a polar functional group and an aromatic group may contain a hydroxy group as the polar functional group and an aromatic group having 6 to 20 carbon atoms. For example, the fifth (meth)acrylate-based monomer containing a polar functional group and an aromatic group may include at least one of 2-hydroxy-3-phenoxyethyl (meth)acrylate, 2-hydroxy-3-phenoxypropyl (meth)acrylate, 2-hydroxy-3-phenoxybutyl (meth)acrylate, 2-acryloyloxyethyl 2-hydroxyethyl phthalate (Kyoeisha Chemical Co., Ltd., HOA-MPE (N)), and 2-methacryloyloxyethyl 2-hydroxy propyl phthalate (Kyoeisha Chemical Co., Ltd., HO-MPP(N)).

The fifth (meth)acrylate-based monomer containing a polar functional group and an aromatic group is contained in an amount of 5 parts by weight or more and 35 parts by weight or less, or may be contained in an amount of 10 parts by weight or more and 30 parts by weight or less, 15 parts by weight or more and 25 parts by weight or less, 5 parts by weight or

more and 25 parts by weight or less, or 15 parts by weight or more and 35 parts by weight or less based on 100 parts by weight of the urethane (meth)acrylate-based resin syrup. When the content of the fifth (meth)acrylate-based monomer containing a polar functional group and an aromatic group is within the above-described range, the stress relaxation performance and heat resistance of the cured product of the photocurable composition may be improved.

According to one embodiment of the present disclosure, the total content of the fourth (meth)acrylate-based monomer and the fifth (meth)acrylate-based monomer may be 30 parts by weight or more and 50 parts by weight or less based on 100 parts by weight of the urethane (meth)acrylate-based resin syrup. When the sum of the contents of the fourth (meth)acrylate-based monomer and the fifth (meth)acrylate-based monomer contained in the photocurable composition is within the above-described range, the photocurable composition may implement a coating layer having excellent surface quality and thickness uniformity. In addition, the stress relaxation performance and heat resistance of the cured product of the photocurable composition may be improved.

According to one embodiment of the present disclosure, the fourth (meth)acrylate-based monomer and the fifth (meth) acrylate-based monomer may have a weight ratio of 1:0.5 to 1:1.5. By adjusting the weight ratio of the fourth (meth) acrylate-based monomer and the fifth (meth)acrylate-based monomer to the above-described range, the photocurable composition may implement a coating layer having excellent surface quality and thickness uniformity. In addition, the stress relaxation performance and heat resistance of the cured product of the photocurable composition may be improved.

According to one embodiment of the present disclosure, the photocurable composition may comprise a multifunctional urethane (meth)acrylate-based compound. By the photocurable composition comprising the multifunctional urethane (meth)acrylate-based compound, the crosslinking reaction of the photocurable composition may be appropriately adjusted, and the photocurable composition may implement a coating layer having improved mechanical properties and stress relaxation properties.

According to one embodiment of the present disclosure, the multifunctional urethane (meth)acrylate-based compound may contain two or more (meth)acrylate groups as functional groups. Specifically, the multifunctional urethane (meth)acrylate-based compound may contain 2 to 6, or 3 to 5 (meth)acrylate groups. Through the photocurable composition comprising a multifunctional urethane (meth)acrylate-based compound having a functional group number satisfying the above-described range, a coating layer having more improved stress relaxation performance and mechanical properties may be implemented. In addition, the multifunctional urethane (meth)acrylate-based compounds may be used alone or in combination of different types thereof.

According to one embodiment of the present disclosure, the multifunctional urethane (meth)acrylate-based compound may contain a caprolactone acrylate-derived polymerization unit and three or more (meth)acrylate groups. Specifically, the multifunctional urethane (meth)acrylate-based compound may include a compound represented by Chemical Formula 1 below.

[Chemical Formula 1]

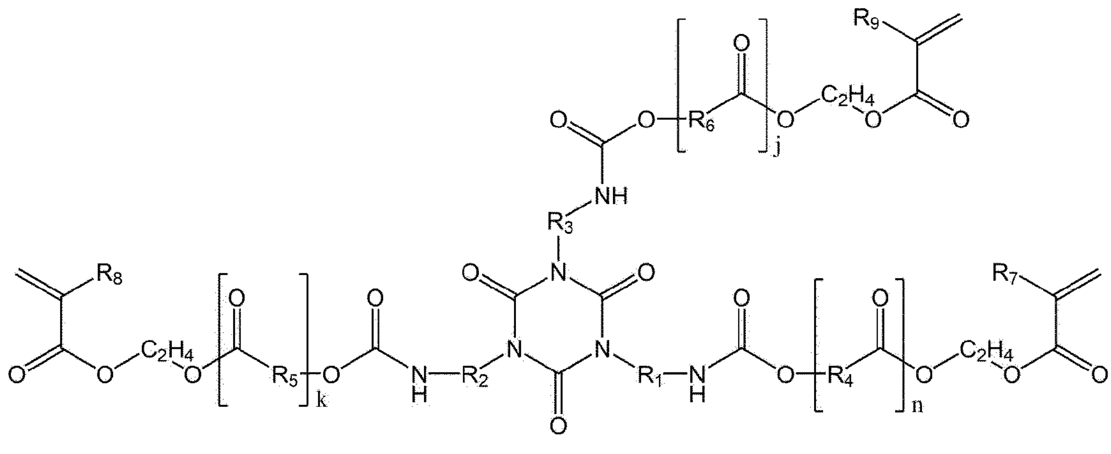

In Chemical Formula 1, $R_1$, $R_2$, and $R_3$ are each independently an alkylene having 2 to 10 carbon atoms, $R_4$, $R_5$, and $R_6$ are each independently an alkylene having 2 to 7 carbon atoms, $R_7$, $R_8$, and $R_9$ are each independently hydrogen or a methyl group, and n, j, and k are each independently an integer of 1 to 3. Specifically, in Chemical Formula 1 above, $R_1$, $R_2$, and $R_3$ may be each independently an alkylene having 3 to 8 carbon atoms, an alkylene having 4 to 7 carbon atoms, or an alkylene having 5 to 6 carbon atoms. In addition, $R_4$, $R_5$, and $R_6$ may be each independently an alkylene having 3 to 6 carbon atoms or an alkylene having 3 to 6 carbon atoms.

It may be possible to provide a photocurable composition that can appropriately adjust the crosslinking reaction

of the photocurable composition and can implement a coating layer having improved mechanical properties and stress relaxation properties, by comprising the multifunctional urethane (meth)acrylate-based compound including the compound represented by Chemical Formula 1 above.

According to one embodiment of the present disclosure, the multifunctional urethane (meth)acrylate-based compound may include a compound represented by Chemical Formula 1-1 below.

[Chemical Formula 1-1]

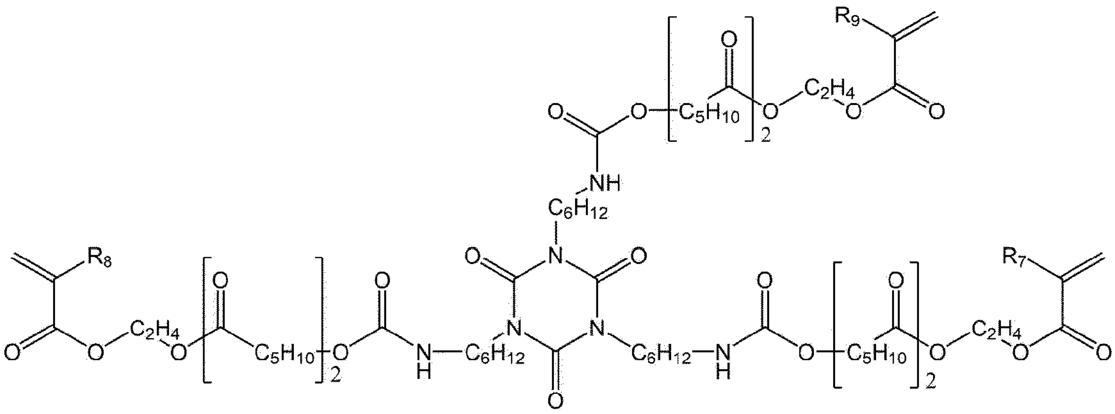

According to one embodiment of the present disclosure, the multifunctional urethane (meth)acrylate-based compound may have a weight average molecular weight of 2,000 g/mol or more and 5,000 g/mol or less. Specifically, the multifunctional urethane (meth)acrylate-based compound may have a weight average molecular weight of 2,500 g/mol or more and 4,500 g/mol or less, 3,000 g/mol or more and 4,000 g/mol or less, 3,500 g/mol or more and 3,800 g/mol or less, 2,000 g/mol or more and 4,000 g/mol or less, 2,300 g/mol or more and 3,800 g/mol or less, 2,700 g/mol or more and 3,600 g/mol or less, 3,100 g/mol or more and 3,500 g/mol or less, 3,000 g/mol or more and 5,000 g/mol or less, 3,200 g/mol or more and 4,800 g/mol or less, 3,300 g/mol or more and 4,500 g/mol or less, 3,500 g/mol or more and 4,200 g/mol or less, or 3,700 g/mol or more and 4,000 g/mol or less.

When the weight average molecular weight of the multifunctional urethane (meth)acrylate-based compound is within the above-described range, the crosslinking reaction of the photocurable composition may be easily adjusted, and the photocurable composition may easily implement a coating layer having excellent stress relaxation performance and mechanical properties. Through this, it may be possible to prevent the coating layer from being deformed depending on an external impact or condition, and it may be possible to suppress a decrease in the stress relaxation performance of the coating layer. In addition, by adjusting the weight average molecular weight of the multifunctional urethane (meth)acrylate-based compound to the above-described range, it may be possible to suppress a decrease in the coating properties of the photocurable composition.

According to one embodiment of the present disclosure, the multifunctional urethane (meth)acrylate-based compound may be contained in an amount of 0.5 parts by weight or more and 2 parts by weight or less, 0.7 parts by weight or more and 1.7 parts by weight or less, 1 part by weight or more and 1.5 parts by weight or less, 1.1 parts by weight or more and 1.3 parts by weight or less, 0.5 parts by weight or more and 1.5 parts by weight or less, or 1 part by weight or more and 2 parts by weight or less based on 100 parts by weight of the urethane (meth)acrylate-based resin. By adjusting the content of the multifunctional urethane (meth)acrylate-based compound to the above-described range, it may be possible to improve the coating properties of the photocurable composition, and to improve the surface quality and thickness uniformity of the coating layer described later. In addition, when the content of the multifunctional urethane (meth)acrylate-based compound is within the above-described range, the degree of crosslinking of the cured product of the photocurable composition may be effectively adjusted, and through this, the stress relaxation performance and mechanical properties of the coating layer may be effectively improved.

According to one embodiment of the present disclosure, the photocurable composition may comprise a multifunctional (meth)acrylate-based compound. The multifunctional (meth)acrylate-based compound may contain two or more (meth)acrylate groups as functional groups. Specifically, the multifunctional (meth)acrylate-based compound may contain 2 to 6, or 2 to 5 (meth)acrylate groups. By using a multifunctional (meth)acrylate-based compound having a functional group number satisfying the above-described range, it may be possible to adjust and improve the curing density of the photocurable composition, and to improve a coating layer whose stress relaxation performance and tensile strength are easily adjusted.

According to one embodiment of the present disclosure, the multifunctional (meth)acrylate-based compound may include at least one of hexanediol di(meth)acrylate, tripropylene glycol di(meth)acrylate, ethylene glycol di(meth)acrylate, trimethylolpropane tri(meth)acrylate, trimethylolpropane ethoxy tri(meth)acrylate, glycerin propoxylated tri(meth)acrylate, pentaerythritol tetra(meth)acrylate, and dipentaerythritol hexa(meth)acrylate. In addition, the multifunctional (meth)acrylate-based compounds may be used alone or in combination of different types thereof.

According to one embodiment of the present disclosure, the multifunctional (meth)acrylate-based compound may be contained in an amount of 0.5 parts by weight or more and 1.5 parts by weight or less, 0.7 parts by weight or more and 1.2 parts by weight or less, 0.5 parts by weight or more and 1 part by weight or less, or 0.8 parts by weight or more and 1.5 parts by weight or less based on 100 parts by weight of the urethane (meth)acrylate-based resin. By adjusting the content of the multifunctional (meth)acrylate-based compound to the above-described range, it may be possible to improve the stress relaxation performance and mechanical properties of the cured product of the photocurable composition. In addition, when the content of the multifunctional (meth)acrylate-based compound is within the above-described range, it may be possible to suppress a decrease in the coating properties of the photocurable composition and a decrease in the surface quality of the coating film.

According to one embodiment of the present disclosure, the photocurable composition may comprise a photoinitiator. Photoinitiators used in the art may be selected and used as the photoinitiator without limitation. For example, at least one of HP-8 (Miwon Specialty Chemical Co., Ltd.), Irgacure #651 (BASF), Irgacure #1173 (BASF), and CP-4 (Irgacure #184) may be used as the photoinitiator, but the type of the photoinitiator is not limited.

According to one embodiment of the present disclosure, the photoinitiator may be contained in an amount of 0.5 parts by weight or more and 3 parts by weight or less based on 100 parts by weight of the urethane (meth)acrylate-based resin. Specifically, the photoinitiator may be contained in an amount of 0.7 parts by weight or more and 2.75 parts by weight or less, 1 part by weight or more and 2.5 parts by weight or less, 1.5 parts by weight or more and 2.2 parts by weight or less, or 1.7 parts by weight or more and 2 parts by weight or less based on 100 parts by weight of the urethane (meth)acrylate-based resin. By adjusting the content of the photoinitiator to the above-described range, it may be possible to effectively perform the photocuring reaction of the photocurable composition.

According to one embodiment of the present disclosure, the photocurable composition may have a viscosity of 3,000 cPs or less. Specifically, the photocurable composition may have a viscosity at 25°C of 400 cPs or more and 3,000 cPs or less. More specifically, the photocurable composition may have a viscosity at 25°C of 500 cPs or more and 2,900 cPs or less, 600 cPs or more and 2,800 cPs or less, 700 cPs or more and 2,000 cPs or less, 450 cPs or more and 1,800 cPs or less, 500 cPs or more and 1,650 cPs or less, 550 cPs or more and 1,550 cPs or less, 600 cPs or more and 1,450 cPs or less, 650 cPs or more and 1,400 cPs or less, 700 cPs or more and 1,350 cPs or less, 1,000 cPs or more and 3,000 cPs or less, 1,100 cPs or more and 2,950 cPs or less, 1,200 cPs or more and 2,900 cPs or less, 1,250 cPs or more and 2,850 cPs or less, or 1,300 cPs or more and 2,800 cPs or less.

The photocurable composition having a viscosity at 25°C satisfying the above-described range may have excellent coating properties, and a coating film of the photocurable composition and a coating layer including a cured product of the photocurable composition may have excellent surface quality and thickness uniformity. Specifically, the total thickness variation (TTV) described later of the coating film and the cured product of the photocurable composition may be effectively reduced.

One embodiment of the present disclosure provides a coating layer including a cured product of the photocurable composition.

The coating layer according to one embodiment of the present disclosure may have excellent surface quality by having a low TTV. As described above, the photocurable composition has excellent wetting properties and coating properties, and thus the coating film of the photocurable composition may have excellent surface quality and thickness uniformity. Accordingly, the coating layer formed by curing the coating film of the photocurable composition may also have excellent surface quality and thickness uniformity. In addition, the coating layer may have excellent stress relaxation performance and heat resistance.

According to one embodiment of the present disclosure, the photocurable composition may be cured by irradiation in a light amount of 1.5 $J/cm^2$ to 2.0 $J/cm^2$ using a UV lamp having a wavelength value of 300 nm or more and 400 nm or less.

According to one embodiment of the present disclosure, the coating layer may have a total thickness variation (TTV) of 3 $\mu$m or less, or 1 $\mu$m or more and 3 $\mu$m or less, the total thickness variation being defined as the difference between the maximum thickness and the minimum thickness.

According to one embodiment of the present disclosure, the coating layer may have a total thickness variation of 3 $\mu$m or less based on a coating direction (MD) of the photocurable composition. Specifically, the coating layer may have a total thickness variation of 2 $\mu$m or less based on the coating direction (MD). In addition, the coating layer may have a total thickness variation of 3 $\mu$m or less or 2 $\mu$m or less based on a vertical direction (TD) orthogonal to the coating direction (MD). The coating layer whose the total thickness variation with respect to the coating direction (MD) and/or the vertical direction (TD) satisfies the above-described range may have excellent surface quality and thickness uniformity.

Throughout the present specification, the coating direction (MD) of the photocurable composition is defined as a direction in which a base film is coated with the photocurable composition or the photocurable composition is applied onto a

base film in order to form the coating layer. In addition, the vertical direction (TD) is defined as a direction orthogonal to the aforementioned coating direction (MD).

According to one embodiment of the present disclosure, the coating layer may have a thickness of 10 μm or more and 100 μm or less. Specifically, the coating layer may have a thickness of 15 μm or more and 85 μm or less, 20 μm or more and 75 μm or less, 25 μm or more and 70 μm or less, 30 μm or more and 65 μm or less, 35 μm or more and 60 μm or less, 40 μm or more and 55 μm or less, 45 μm or more and 50 μm or less, 48 μm or more and 50 μm or less, 49 μm or more and 51 μm or less, or 53 μm or more and 55 μm or less. By adjusting the thickness of the coating layer to the above-described range, it may be possible to further improve the stress relaxation performance and mechanical properties of the coating layer.

According to one embodiment of the present disclosure, the coating layer may have a stress relaxation rate of 78% or more. Specifically, the coating layer may have a stress relaxation rate of 79% or more, or 80% or more. In addition, the coating layer may have a stress relaxation rate of 82% or less, 81% or less, or 80% or less. The stress relaxation rate of the coating layer may be measured as described in an Experimental Example described later. The coating layer having a stress relaxation rate within the above-described range may be easily applied as a process film.

One embodiment of the present disclosure provides a process film containing the coating layer.

The process film according to one embodiment of the present disclosure has excellent stress relaxation performance and heat resistance and thus it may be easily applied to processing processes in various fields such as electronic control devices, semiconductors, and display panels. The process film has excellent stress relaxation performance, and thus may effectively protect an object from impacts generated during the processing process. Specifically, by using the process film containing the coating layer, it may be possible to effectively prevent damage, warpage phenomenon, etc. that may occur during a processing process of the object. In addition, the process film containing the coating layer having excellent heat resistance is suppressed from being deformed or damaged even when exposed to heat and thus it may be easily applied to a processing process of an object exposed to heat.

According to one embodiment of the present disclosure, the process film may be used as a process film in various fields. For example, the process film may be used as a display panel process film, a semiconductor process film, an electronic control device process film, and the like.

According to one embodiment of the present disclosure, the process film may include a release film provided on one surface of the coating layer. In this case, the coating layer includes a cured product of the above-described photocurable composition. A coating layer may be formed on the release film by applying the photocurable composition onto the release film and photocuring the photocurable composition.

According to one embodiment of the present disclosure, the release film may be a polyethylene terephthalate film, a polyolefin film, an ethylene-vinyl acetate film, a polybutylene terephthalate film, a polypropylene film, or a polyethylene film, but the type of the release film is not limited. The release film may have a thickness of 10 μm or more and 200 μm or less.

According to one embodiment of the present disclosure, the process film may further include an adhesive layer provided on the coating layer. Adhesive layers used in the art may be used as the adhesive layer. The adhesive layer may have a thickness of 20 μm or more and 50 μm or less.

[Mode for Carrying Out the Invention]

Hereinafter, Examples will be described in detail to explain the present disclosure in detail. However, the Examples according to the present disclosure can be modified in many different forms, and the scope of the present disclosure is not construed as being limited to the Examples described below. The Examples of the present specification are provided to more completely explain the present disclosure to those skilled in the art.

Hereinafter, the Examples will be described in detail to explain the present disclosure in detail.

**Preparation of Urethane (meth)acrylate-based Resin Syrup**

**Preparation Example 1**

A first mixture was prepared by inputting Nippollan 963 (Tosoh Corporation) as a polyalkylene carbonate-based polyol including, as a repeating unit, a carbonate structure containing an alkylene having a methyl group bonded to a side chain thereof, isophorone diisocyanate (IPDI; Evonik) and hexamethylene diisocyanate (50M-HDI; Asahi Kasei) as diisocyanate-based compounds, and isobornyl acrylate (IBOA; Solvay) into a 5-neck 2L reactor and mixing the materials. At this time, IPDI was contained in an amount of about 13 parts by weight, and 50M-HDI was contained in an amount of about 1.4 parts by weight, based on 100 parts by weight of Nippollan 963. In addition, Nippollan 963 and IPDI had a molar ratio of 1.0:1.25, and Nippollan 963 and 50M-HDI had a molar ratio of 4.0:1.0.

Thereafter, the temperature of the first mixture was raised to 65°C and maintained, and 50 ppm of dibutyltin

dilaurate (DBTDL), which is a tin-based catalyst, was inputted to induce an exothermic reaction, thereby preparing a polyalkylene carbonate-based urethane prepolymer having an isocyanate end group.

Thereafter, a second mixture was prepared by mixing the prepared polyalkylene carbonate-based urethane prepolymer with 2-hydroxyethyl methacrylate (2-HEMA, Nippon Shokubai), which is a reactive group-containing (meth) acrylate-based compound, and a urethane (meth)acrylate-based resin (A1) was prepared by confirming that the NCO peak at 2,250 $cm^{-1}$ disappeared through Fourier-transform infrared spectroscopy (FT-IR). At this time, 2-HEMA was contained in an amount of about 1.3 parts by weight based on 100 parts by weight of the polyalkylene carbonate-based urethane prepolymer.

Thereafter, a urethane (meth)acrylate-based resin syrup was prepared by adding 2-ethylhexyl acrylate (2-EHA; LG Chem) as a first (meth)acrylate-based monomer, isobornyl acrylate (IBOA) as a second (meth)acrylate-based monomer, 2-hydroxyethyl acrylate (2-HEA; Nippon Shokubai) as a third (meth)acrylate-based monomer, O-phenylphenoxyethyl acrylate (OPPEA; M1142, Miwon Specialty Chemical Co., Ltd.) as a fourth (meth)acrylate-based monomer, and 2-hydroxy-3-phenoxypropylacrylate (PGE-001; Hannong Chemicals) as a fifth (meth)acrylate-based monomer to the prepared urethane (meth)acrylate-based resin.

At this time, the urethane (meth)acrylate-based resin was contained in an amount of 25 parts by weight, 2-EHA was contained in an amount of 5 parts by weight, IBOA was contained in an amount of 30 parts by weight, 2-HEA was contained in an amount of 10 parts by weight, OPPEA was contained in an amount of 20 parts by weight, and PGE-001 was contained in an amount of 10 parts by weight, based on 100 parts by weight of the urethane (meth)acrylate-based resin syrup.

The prepared urethane (meth)acrylate-based resin had a weight average molecular weight of 20,100 g/mol. In addition, the prepared urethane (meth)acrylate-based resin syrup had a viscosity at 25°C of about 680 cPs, the viscosity being measured by a Brookfield viscometer (rotational speed of 10 rpm) at spindle No. 40.

**Preparation Example 2**

A polyalkylene carbonate-based urethane prepolymer having an isocyanate end group was prepared in the same manner as in Preparation Example 1 except that the content of IPDI was adjusted to about 12 parts by weight and the content of 50M-HDI was adjusted to about 0.5 parts by weight, based on 100 parts by weight of Nippollan 963 in Preparation Example 1. At this time, Nippollan 963 and IPDI had a molar ratio of 3.0:3.5, and Nippollan 963 and 50M-HDI had a molar ratio of 6.0:1.0.

Thereafter, a urethane (meth)acrylate-based resin (A2) was prepared in the same manner as in Preparation Example 1 except that the content of 2-HEMA was adjusted to about 0.6 parts by weight based on 100 parts by weight of the polyalkylene carbonate-based urethane prepolymer in Preparation Example 1.

Thereafter, a urethane (meth)acrylate-based resin syrup was prepared by adjusting the content of the urethane (meth)acrylate-based resin to 25 parts by weight, the content of 2-EHA to 5 parts by weight, the content of IBOA to 20 parts by weight, the content of 2-HEA to 10 parts by weight, the content of OPPEA to 20 parts by weight, and the content of PGE-001 to 20 parts by weight, based on 100 parts by weight of the urethane (meth)acrylate-based resin syrup in Preparation Example 1.

The prepared urethane (meth)acrylate-based resin had a weight average molecular weight of 30,600 g/mol. In addition, the prepared urethane (meth)acrylate-based resin syrup had a viscosity at 25°C of about 1,400 cPs, the viscosity being measured by a Brookfield viscometer (rotational speed of 10 rpm) at spindle No. 40.

**Preparation Example 3**

A polyalkylene carbonate-based urethane prepolymer having an isocyanate end group was prepared in the same manner as in Preparation Example 1 except that the content of IPDI was adjusted to about 11.9 parts by weight and the content of 50M-HDI was adjusted to about 0.5 parts by weight, based on 100 parts by weight of Nippollan 963 in Preparation Example 1. At this time, Nippollan 963 and IPDI had a molar ratio of 1.0:1.1, and Nippollan 963 and 50M-HDI had a molar ratio of 10.0:1.0.

Thereafter, a urethane (meth)acrylate-based resin (A3) was prepared in the same manner as in Preparation Example 1 except that the content of 2-HEMA was adjusted to about 0.4 parts by weight based on 100 parts by weight of the polyalkylene carbonate-based urethane prepolymer in Preparation Example 1.

Thereafter, a urethane (meth)acrylate-based resin syrup was prepared by adjusting the content of the urethane (meth)acrylate-based resin to 25 parts by weight, the content of 2-EHA to 5 parts by weight, the content of IBOA to 10 parts by weight, the content of 2-HEA to 10 parts by weight, the content of OPPEA to 20 parts by weight, and the content of PGE-001 to 30 parts by weight, based on 100 parts by weight of the urethane (meth)acrylate-based resin syrup in Preparation Example 1.

The prepared urethane (meth)acrylate-based resin had a weight average molecular weight of 41,800 g/mol. In

addition, the prepared urethane (meth)acrylate-based resin syrup had a viscosity at 25°C of about 2,700 cPs, the viscosity being measured by a Brookfield viscometer (rotational speed of 10 rpm) at spindle No. 40.

[Table 1]

| | Preparation Example 1 | Preparation Example 2 | Preparation Example 3 |
|---|---|---|---|
| Polyalkylene carbonate-based polyol | Nippollan 963 | Nippollan 963 | Nippollan 963 |
| IPDI (parts by weight) | 13.0 | 12.0 | 11.9 |
| 50M-HDI (parts by weight) | 1.4 | 0.5 | 0.5 |
| 2-HEMA (parts by weight) | 1.3 | 0.6 | 0.4 |
| $M_w$ (g/mol) | 20,100 | 30,600 | 41,800 |
| Molecular weight distribution (PDI) | 1.75 | 1.84 | 1.95 |

In Table 1, the contents of IPDI and 50M-HDI are based on 100 parts by weight of the polyalkylene carbonate-based polyol, and the content of 2-HEMA is based on 100 parts by weight of the polyalkylene carbonate-based urethane prepolymer prepared.

[Table 2]

| | Preparation Example 1 | Preparation Example 2 | Preparation Example 3 |
|---|---|---|---|
| Urethane (meth)acrylate-based resin (parts by weight) | A1 (25) | A2 (25) | A3 (25) |
| 2-EHA (parts by weight) | 5 | 5 | 5 |
| IBOA (parts by weight) | 30 | 20 | 10 |
| 2-HEA (parts by weight) | 10 | 10 | 10 |
| OPPEA (parts by weight) | 20 | 20 | 20 |
| PGE-001 (parts by weight) | 10 | 20 | 30 |
| Viscosity (cP, 25°C) | 680 | 1, 400 | 2,700 |

In Table 2, the contents of the urethane (meth)acrylate-based resin, 2-EHA, IBOA, 2-HEA, OPPEA, and PGE-001 are based on 100 parts by weight of the urethane (meth)acrylate-based resin syrup.

**Comparative Preparation Example 1**

A urethane prepolymer having an isocyanate end group was prepared in the same manner as in Preparation Example 1 except that, in Preparation Example 1, PPG2000 (KPX Chemical Co., Ltd.), which is an ether-based polyol, was used instead of Nippollan 963, and the content of IPDI was adjusted to about 12 parts by weight, and the content of 50M-HDI was adjusted to about 0.5 parts by weight, based on 100 parts by weight of PPG2000.

Thereafter, a urethane (meth)acrylate-based resin (B1) was prepared, and a urethane (meth)acrylate-based resin syrup was prepared in the same manner as in Preparation Example 1 except that the content of 2-HEMA was adjusted to about 0.6 parts by weight based on 100 parts by weight of the urethane prepolymer in Preparation Example 1.

The prepared urethane (meth)acrylate-based resin had a weight average molecular weight of 31,000 g/mol. In addition, the prepared urethane (meth)acrylate-based resin syrup had a viscosity at 25°C of about 800 cPs, the viscosity being measured by a Brookfield viscometer (rotational speed of 10 rpm) at spindle No. 40.

**Comparative Preparation Example 2**

A urethane prepolymer having an isocyanate end group was prepared in the same manner as in Comparative Preparation Example 1 except that CAPA2201A (Perstorp), which is an ester-based polyol, was used instead of PPG2000 in Comparative Preparation Example 1.

Thereafter, a urethane (meth)acrylate-based resin (B2) was prepared, and a urethane (meth) acrylate-based resin syrup was prepared in the same manner as in Comparative Preparation Example 1.

The prepared urethane (meth)acrylate-based resin had a weight average molecular weight of 39,000 g/mol. In addition, the prepared urethane (meth)acrylate-based resin syrup had a viscosity at 25°C of about 4,900 cPs, the viscosity being measured by a Brookfield viscometer (rotational speed of 10 rpm) at spindle No. 40.

**Comparative Preparation Example 3**

A urethane prepolymer having an isocyanate end group was prepared in the same manner as in Comparative Preparation Example 1 except that, in Comparative Preparation Example 1, P2000 (Cray Valley), which is an olefin-based polyol, was used instead of PPG2000, and the content of IPDI was adjusted to about 11.5 parts by weight and the content of 50M-HDI was adjusted to about 0.5 parts by weight based on 100 parts by weight of P2000.

Thereafter, a urethane (meth)acrylate-based resin (B3) was prepared, and a urethane (meth) acrylate-based resin syrup was prepared in the same manner as in Comparative Preparation Example 1.

The prepared urethane (meth)acrylate-based resin had a weight average molecular weight of 39,500 g/mol. In addition, the prepared urethane (meth)acrylate-based resin syrup had a viscosity at 25°C of about 6,800 cPs, the viscosity being measured by a Brookfield viscometer (rotational speed of 10 rpm) at spindle No. 40.

**Comparative Preparation Example 4 to Comparative Preparation Example 7**

The urethane (meth)acrylate-based resin prepared in Preparation Example 2 was prepared. Thereafter, urethane (meth)acrylate-based resin syrups were prepared in the same manner as in Preparation Example 2 except that the contents of urethane (meth)acrylate-based resin, 2-EHA, IBOA, 2-HEA, OPPEA, and PGE-001 were adjusted as shown in Table 4 below.

[Table 3]

| | Comparative Preparation Example 1 | Comparative Preparation Example 2 | Comparative Preparation Example 3 |
|---|---|---|---|
| Polyol | PPG2000 | CAPA2201A | P2000 |
| IPDI (parts by weight) | 12.0 | 12.0 | 11.5 |
| 50M-HDI (parts by weight) | 0.5 | 0.5 | 0.5 |
| 2-HEMA (parts by weight) | 0.6 | 0.6 | 0.6 |
| $M_w$ (g/mol) | 31,000 | 39, 000 | 39,500 |

In Table 3, the contents of IPDI and 50M-HDI are based on 100 parts by weight of the polyol, and the content of 2-HEMA is based on 100 parts by weight of the urethane prepolymer prepared.

[Table 4]

| | Comparative Preparation Example 1 | Comparative Preparation Example 2 | Comparative Preparation Example 3 | Comparative Preparation Example 4 | Comparative Preparation Example 5 | Comparative Preparation Example 6 | Comparative Preparation Example 7 |
|---|---|---|---|---|---|---|---|
| Urethane (meth)acrylate-based resin (parts by weight) | B1 (25) | B2 (25) | B3 25) | A2 (25) | A2 (25) | A2 (25) | A2 (25) |
| 2-EHA (parts by weight) | 5 | 5 | 5 | 5 | 5 | 5 | 5 |
| IBOA (parts by weight) | 30 | 20 | 10 | 60 | 50 | 40 | 0 |
| 2-HEA (parts by weight) | 10 | 10 | 10 | 10 | 10 | 10 | 10 |
| OPPEA (parts by weight) | 20 | 20 | 20 | 0 | 0 | 20 | 20 |
| PGE-001 (parts by weight) | 10 | 20 | 30 | 0 | 10 | 0 | 40 |
| Viscosity (cP, 25°C) | 800 | 4,900 | 6,800 | 450 | 690 | 2,200 | 6,200 |

In Table 4, the contents of the urethane (meth)acrylate-based resin, 2-EHA, IBOA, 2-HEA, OPPEA, and PGE-001 are based on 100 parts by weight of the urethane (meth)acrylate-based resin syrup. Differences in resins were compared in Comparative Preparation Example 1, Comparative Preparation Example 2, and Comparative Preparation Example 3 in which urethane acrylate has a structure different from that of polyalkylene carbonate based urethane acrylate which is a Preparation Example. Differences in the contents of the monofunctional monomers having a benzene ring were compared in Comparative Preparation Examples 4, 5, and 6 in which the polyalkylene carbonate based urethane acrylate resin is applied as in the Preparation Example.

## Preparation of Process Film Containing Photocurable Composition and Coating Layer

### Example 1

A photocurable composition was prepared by mixing the urethane (meth)acrylate-based resin syrup prepared in Preparation Example 1 with a trifunctional urethane (meth)acrylate-based compound (GD301, LG Chem) represented by Chemical Formula 1-1 above ($R_7$ to $R_9$ are hydrogen) having a weight average molecular weight of 3,500 g/mol, 1,6-hexanediol diacrylate (HDDA; M200, Miwon Specialty Chemical Co., Ltd.) as a multifunctional (meth)acrylate-based compound, and Irgacure #651 (BASF) as a photoinitiator. The viscosity of the photocurable composition measured by the method described above was about 850 cPs at 25°C.

At this time, the content of the trifunctional urethane (meth)acrylate-based compound was 1.2 parts by weight, the content of HDDA was 0.8 Parts by weight, and the content of the photoinitiator was 0.5 parts by weight, based on 100 parts by weight of the urethane (meth)acrylate-based resin contained in the urethane (meth)acrylate-based resin syrup.

Thereafter, the prepared photocurable composition was applied onto a PET release film having a thickness of about 150 μm using a slot die. Thereafter, the photocurable composition was cured by irradiating the photocurable composition at a total light amount of 1.5 J/cm$^2$ using a UV lamp having a wavelength value of 340 nm under nitrogen conditions. Through this, a process film in which a coating layer having a thickness of about 50 to 52 μm was formed on the PET release film was prepared.

### Example 2

A coating layer and a process film containing the coating layer were prepared in the same manner as in Example 1 except that the urethane (meth)acrylate-based resin syrup prepared in Preparation Example 2 was used instead of the urethane (meth)acrylate-based resin syrup prepared in Preparation Example 1.

### Example 3

A coating layer and a process film containing the coating layer were prepared in the same manner as in Example 1 except that the urethane (meth)acrylate-based resin syrup prepared in Preparation Example 3 was used instead of the urethane (meth)acrylate-based resin syrup prepared in Preparation Example 1.

[Table 5]

| | Example 1 | Example 2 | Example 3 |
|---|---|---|---|
| Urethane (meth)acrylate-based resin syrup | Preparation Example 1 | Preparation Example 2 | Preparation Example 3 |
| GD301 (parts by weight) | 1.2 | 1.2 | 1.2 |
| HDDA (parts by weight) | 0.8 | 0.8 | 0.8 |
| Photoinitiator (parts by weight) | 0.5 | 0.5 | 0.5 |
| Viscosity (cP, 25°C) | 850 | 1,510 | 2, 900 |

In Table 5, the contents of GD301, HDDA, and the photoinitiator are based on 100 parts by weight of the urethane (meth)acrylate-based resin contained in the urethane (meth)acrylate-based resin syrup.

### Comparative Examples 1 to 7

A coating layer and a process film containing the coating layer were prepared in the same manner as in Example 1 except that the urethane (meth)acrylate-based resin syrup was used as shown in Table 6 below.

[Table 6]

| | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| Urethane (meth)acryla te-based resin syrup | Comparative Preparation Example 1 | Comparative Preparation Example 2 | Comparative Preparation Example 3 | Comparative Preparation Example 4 | Comparative Preparation Example 5 | Comparative Preparation Example 6 | Comparative Preparation Example 7 |
| GD301 (parts by weight) | 1.2 | 1.2 | 1.2 | 1.2 | 1.2 | 1.2 | 1.2 |
| HDDA (parts by weight) | 0.8 | 0.8 | 0.8 | 0.8 | 0.8 | 0.8 | 0.8 |
| Photoinitiat or (parts by weight) | 0.5 | 0.5 | 0.5 | 0.5 | 0.5 | 0.5 | 0.5 |
| Viscosity (cP, 25°C) | 810 | 5,010 | 7,010 | 600 | 750 | 2,300 | 6,400 |

In Table 6, the contents of GD301, HDDA, and the photoinitiator are based on 100 parts by weight of the urethane (meth)acrylate-based resin contained in the urethane (meth)acrylate-based resin syrup.

## Experimental Example

### Evaluation of Coating Properties

Coating properties of the photocurable compositions of Examples 1 to 3 and Comparative Examples 1 to 7 were evaluated as follows.

Specifically, the direction in which the photocurable composition is applied in the preparation process of the process film is defined as the coating direction (MD), and when the high force is applied to a pump using a gear of Kawasaki by passing the photocurable composition through 15 microfilters during coating of the photocurable composition in the coating direction (MD), the photocurable composition is not applied evenly due to the pump pressure so that thickness deviation occurs. Coating properties were evaluated based on the following criteria, and the results are shown in Tables 7 and 8 below.

<Determination Criteria>

○ (Good): The force applied to the pump is 1 kgf or less
△ (Possible): The force applied to the pump is more than 1 kgf and 3 kgf or less
× (Impossible): The force applied to the pump is more than 3 kgf

### Measurement of Total Thickness Variation (TTV)

Total Thickness Variations (TTV) of the coating layers prepared in Examples 1 to 3 and Comparative Examples 1 to 7 were measured as follows.

Specifically, the direction in which the photocurable composition is applied in the preparation process of the process film was defined as the coating direction (MD), and the direction orthogonal to the coating direction (MD) was defined as the vertical direction (TD). Subsequently, the total thickness variations were calculated by measuring the differences between the maximum thicknesses and the minimum thicknesses of the coating layers with respect to each of the coating direction (MD) and the vertical direction (TD), and the results are shown in Tables 7 and 8 below.

### Evaluation of Stress Relaxation Properties

Stress relaxation properties of the process films prepared in Examples 1 to 3 and Comparative Examples 1 to 7 were evaluated as follows.

Stress relaxation properties refer to the degree of preventing cracking phenomena or warpage caused by an impact applied to a thin film panel by a force that is generated such that the thin film panel is not restored when attached to a curved substrate, and the process films prepared in Examples 1 to 3 and Comparative Examples 1 to 7 were respectively prepared into specimens each having a size of 15 mm × 100 mm × 0.05 mm (width × length × thickness). Thereafter, stress relaxation properties were evaluated using measuring equipment (Stable Micro Systems, texture analyzer), and the rate of change of force (A) measured at the beginning and force (B) measured after 1 minute, when the specimens were tensioned by 40%, was derived through Equation 1 below. The results are shown in Tables 7 and 8 below.

[Equation 1]

$$\text{Stress relaxation rate (\%)} = (A-B)/A \times 100$$

### Water Dipping Test

A water dipping test of the process films prepared in Examples 1 to 3 and Comparative Examples 1 to 7 was performed as follows.

Specifically, coating layer thicknesses of the process films prepared in Examples 1 to 3 and Comparative Examples 1 to 7 were measured, and the process films were completely immersed in distilled water of about 25°C and left alone for 60 minutes. Thereafter, the process films were taken out, and then water on the surfaces thereof was removed.

Thereafter, the coating layer thicknesses were measured, and the changed values between coating layer thicknesses before immersion and coating layer thicknesses after immersion were calculated, and the results are shown in Tables 7 and 8 below.

## Thermal Deformation Evaluation

The 80°C thermal deformation of the process films prepared in Examples 1 to 3 and Comparative Examples 1 to 7 was evaluated as follows.

Specifically, samples were prepared by attaching the coating layers of the process films prepared in Examples 1 to 3 and Comparative Examples 1 to 7 to 8-inch thin mirror wafers. Thereafter, the samples were placed on a suction plate capable of vacuum adsorption and heating, the process films and the panel were attached by vacuum, and then the suction plate was heated for 30 seconds from the time of reaching 80°C. In the case in which the process films were fully exposed to a heat source by conducting this process, it was possible to effectively know whether the process films were thermally deformed or not when effectively exposed to heat.

Thereafter, thermal deformation was evaluated based on the following criteria, and the results are shown in Tables 7 and 8 below.

<Determination Criteria>

5 (non-occurrence): When stains caused by heat do not occur on the surface of the coating layer
4: When stains caused by heat occur in the area of more than 0% and 20% or less of the surface of the coating layer
3: When stains caused by heat occur in the area of more than 20% and 40% or less of the surface of the coating layer
2: When stains caused by heat occur in the area of more than 40% and 60% or less of the surface of the coating layer
1: When stains caused by heat occur in the area of more than 60% and 80% or less of the surface of the coating layer
0 (occurrence): When stains caused by heat occur on the entire surface (100%) of the coating layer

## Evaluation of Film Shrinkage after UV Irradiation

Film shrinkages due to UV irradiation of the process films prepared in Examples 1 to 3 and Comparative Examples 1 to 7 were evaluated as follows.

The prepared process films were respectively prepared into specimens each having a size of 150 mm × 150 mm × 100 μm (width × length × thickness). Thereafter, the edges of the four sides of each of the prepared films were fixed with TESA 4651 tape and were cut with a knife in the shape of a diagonal X in a length of 100 mm × 100 mm centering around the dead center of each of the films, and then the heights of the films raised due to shrinkage were measured so that the degrees of shrinkage of the films after UV curing were evaluated.

[Table 7]

| | Example 1 | Example 2 | Example 3 | Comparative Example 1 | Comparative Example 2 | Comparative Example 3 |
|---|---|---|---|---|---|---|
| Coating properties | ○~Δ | ○ | ○ | ○ | ○~Δ | × |
| TTV-MD (μm) | 2.0 | 1.5 | 2.5 | 2.0 | 6.0 | 8.5 |
| TTV-TD (μm) | 1.9 | 1.8 | 2.0 | 1.5 | 4.5 | 8.0 |
| Stress relaxation rate (%) | 79 | 78 | 80 | 70 | 59 | 55 |
| Elongation (%) | 340 | 390 | 420 | 390 | 290 | 250 |
| Water dipping test (μm) | 1.67 | 1.33 | 1.33 | 5.2 | 4.5 | 1.23 |
| 80°C thermal deformation | 5 Good | 5 Good | 5 Good | 0 Very poor | 3 Poor | 3 Poor |

(continued)

| | Example 1 | Example 2 | Example 3 | Comparative Example 1 | Comparative Example 2 | Comparative Example 3 |
|---|---|---|---|---|---|---|
| Film shrinkage after UV irradiation | < 1 cm (Non-occurrence) | < 1 cm (Non-occurrence) | < 1 cm (Non-occurrence) | < 1 cm (Non-occurrence) | < 1 cm (Non-occurrence) | < 1 cm (Non-occurrence) |

[Table 8]

| | Comparative Example 4 | Comparative Example 5 | Comparative Example 6 | Comparative Example 7 |
|---|---|---|---|---|
| Coating properties | × | ○~Δ | ○~Δ | × |
| TTV-MD (μm) | 3.5 | 2.5 | 2.0 | 5.5 |
| TTV-TD (μm) | 3.5 | 2.9 | 1.9 | 6.7 |
| Stress relaxation rate (%) | 50 | 60 | 63 | 50 |
| Elongation (%) | 100 | 220 | 350 | 60 |
| Water dipping test (μm) | 1.5 | 1.99 | 1.2 | 1.33 |
| 80°C thermal deformation | 5 Good | 5 Good | 5 Good | 5 Good |
| Film shrinkage after UV irradiation | 5 cm or more (Severe contraction) | 5 cm (Contraction occurrence) | 3 cm (Contraction occurrence) | < 1 cm (Non-occurrence) |

Referring to Tables 1 to 4 above, it was confirmed that the urethane (meth)acrylate-based resins prepared in Examples 1 to 3 (Preparation Examples 1 to 3) each had a relatively high weight average molecular weight by including a carbonate repeating unit containing an alkylene having 1 to 10 carbon atoms to which at least one side chain having 1 to 3 carbon atoms is bonded, and the urethane (meth)acrylate-based resin syrups prepared in Examples 1 to 3 (Preparation Examples 1 to 3) each had a viscosity at 25°C within the range of 1,000 to 3,000 cPs suitable for coating. The coating viscosity has the advantage of enabling the thickness variation to be reduced since the resin syrup applied from the slot die during coating may be constantly supplied by uniformly adjusting the pressure applied to the pump during coating to 1 kgf. Meanwhile, it was confirmed that the (meth)acrylate-based resins prepared in Comparative Examples 1 to 3 (Comparative Preparation Examples 1 to 3) that each did not include the carbonate repeating unit had similar weight average molecular weight levels, but the urethane (meth)acrylate-based resin syrups prepared in Comparative Examples 1 to 3 (Comparative Preparation Examples 1 to 3) each had a low viscosity at 25°C or a viscosity of 3,000 cPs or more. It is not easy to adjust the viscosity while satisfying the desired physical properties as described above.

Referring to Tables 5 to 8 above, it was confirmed that the photocurable compositions according to Examples 1 to 3 of the present disclosure each had a viscosity at 25°C of 3,000 cPs or less, and excellent coating properties (particularly, slot die coating properties). In addition, it was confirmed that the coating layers according to Examples 1 to 3 had excellent surface quality and thickness uniformity by having the total thickness variations (TTV) of 3 μm or less in the coating direction (MD) and the total thickness variations (TTV) of 2 μm or less in the vertical direction (TD).

Further, it was confirmed that the process films of Examples 1 to 3 each had excellent stress relaxation performance with a stress relaxation rate of 78% or more and implemented appropriate tensile strengths. Furthermore, it can be seen that the process films of Examples 1 to 3 have excellent heat resistance, and as results of the water dipping test and the film shrinkage test after UV irradiation, they implement physical properties suitable for use as a process film.

Meanwhile, it was confirmed that the photocurable compositions according to Comparative Example 2 and Comparative Example 3 had viscosities at 25°C exceeding 3,000 cPs, and coating properties in the case of Comparative Example 3, Comparative Example 4, and Comparative Example 7 were inferior to those of Examples 1 to 3. In addition, meanwhile, it was confirmed that the coating layers according to Comparative Examples 2 to 4 and Comparative Example 7 were inferior in the surface quality and thickness uniformity by having the total thickness variations (TTV) of 3.5 μm or more than 3.5 μm in the coating direction (MD) and the total thickness variations (TTV) of 5 μm or more in the vertical direction (TD). In addition, the process films according to Comparative Examples 1 to 7 were inferior in the stress relaxation

performance by each having a stress relaxation rate of 70% or less. In particular, it was confirmed that the coating layers according to the Comparative Examples 1 to 3 had inferior heat resistance.

Therefore, the photocurable composition according to one embodiment of the present disclosure has excellent coating properties and thus can implement a coating layer having excellent surface quality and uniform thickness. In addition, it can be seen that the process film prepared using the photocurable composition according to one embodiment of the present disclosure has an excellent stress relaxation rate and excellent heat resistance and thus can be easily used for process films in various fields.

## Claims

**1.** A photocurable composition comprising:

a urethane (meth)acrylate-based resin syrup comprising a urethane (meth)acrylate-based resin that is a reaction product of a polyalkylene carbonate-based urethane prepolymer having an isocyanate end group and a reactive group-containing (meth)acrylate-based compound, and a (meth)acrylate-based monomer mixture;
a multifunctional urethane (meth)acrylate-based compound; and
a multifunctional (meth)acrylate-based compound,
wherein the (meth)acrylate-based monomer mixture comprises an alkyl group-containing first (meth)acrylate-based monomer, an alicyclic alkyl group-containing second (meth)acrylate-based monomer, a polar functional group-containing third (meth)acrylate-based monomer, an aromatic group-containing fourth (meth)acrylate-based monomer, and a fifth (meth)acrylate-based monomer containing a polar functional group and an aromatic group;
the fourth (meth)acrylate-based monomer is contained in an amount of 15 parts by weight or more and 25 parts by weight or less based on 100 parts by weight of the urethane (meth)acrylate-based resin syrup, and
the fifth (meth)acrylate-based monomer is contained in an amount of 5 parts by weight or more and 35 parts by weight or less based on 100 parts by weight of the urethane (meth)acrylate-based resin syrup.

**2.** The photocurable composition of claim 1, wherein the urethane (meth)acrylate-based resin has a weight average molecular weight of 20,000 g/mol or more and 50,000 g/mol or less.

**3.** The photocurable composition of claim 1, wherein the urethane (meth)acrylate-based resin syrup has a viscosity of 500 cPs or more and 3,000 cPs or less at 25°C., wherein the viscosity is measured in that after the composition is debubbled into a bubble-free state, 0.5 mL of a sample is obtained using a 5 mL syringe, and while a constant temperature of the 25°C is maintained, the viscosity of the sample is measured with a Brookfield HB No. 40 spindle for 10 minutes to measure a cPs value at the time point of no change in viscosity.

**4.** The photocurable composition of claim 1, wherein the urethane (meth)acrylate-based resin includes a carbonate repeating unit containing an alkylene having 1 to 10 carbon atoms to which at least one side chain having 1 to 3 carbon atoms is bonded.

**5.** The photocurable composition of claim 1, wherein the polyalkylene carbonate-based urethane prepolymer is a reaction product of a polyalkylene carbonate-based polyol and a diisocyanate-based compound.

**6.** The photocurable composition of claim 5, wherein an amount of the diisocyanate-based compound is 10 parts by weight or more and 20 parts by weight or less based on 100 parts by weight of the polyalkylene carbonate-based polyol.

**7.** The photocurable composition of claim 1, wherein the urethane (meth)acrylate-based resin is contained in an amount of 15 parts by weight or more and 35 parts by weight or less based on 100 parts by weight of the urethane (meth) acrylate-based resin syrup.

**8.** The photocurable composition of claim 1, wherein the second (meth)acrylate-based monomer is contained in an amount of 5 parts by weight or more and 35 parts by weight or less based on 100 parts by weight of the urethane (meth) acrylate-based resin syrup.

**9.** The photocurable composition of claim 1, wherein the total content of the fourth (meth)acrylate-based monomer and the fifth (meth)acrylate-based monomer is 30 parts by weight or more and 50 parts by weight or less based on 100

parts by weight of the urethane (meth)acrylate-based resin syrup.

10. The photocurable composition of claim 1, wherein the fourth (meth)acrylate-based monomer and the fifth (meth) acrylate-based monomer have a weight ratio of 1:0.5 to 1:1.5.

11. A coating layer including a cured product of the photocurable composition according to claim 1.

12. The coating layer of claim 11, wherein the coating layer has a total thickness variation of 3 μm or less, the total thickness variation being defined as a difference between a maximum thickness and a minimum thickness of the coating layer.

13. A process film containing the coating layer according to claim 12.

## Patentansprüche

1. Lichthärtbare Zusammensetzung, umfassend:

   einen Harzsirup auf Urethan(meth)acrylatbasis, umfassend ein Harz auf Urethan(meth)acrylatbasis, das ein Reaktionsprodukt eines Urethanpräpolymers auf Polyalkylencarbonatbasis mit einer Isocyanatendgruppe und einer eine reaktive Gruppe enthaltenden Verbindung auf (Meth)acrylatbasis ist, und eine Monomermischung auf (Meth)acrylatbasis;
   eine multifunktionelle Verbindung auf Urethan(meth)acrylatbasis; und
   eine multifunktionelle Verbindung auf (Meth)acrylatbasis,
   wobei die Monomermischung auf (Meth)acrylatbasis ein eine Alkylgruppe enthaltendes erstes Monomer auf (Meth)acrylatbasis, ein eine alicyclische Alkylgruppe enthaltendes zweites Monomer auf (Meth)acrylatbasis, ein eine polare funktionelle Gruppe enthaltendes drittes Monomer auf (Meth)acrylatbasis, ein eine aromatische Gruppe enthaltendes viertes Monomer auf (Meth)acrylatbasis und ein eine polare funktionelle Gruppe und eine aromatische Gruppe enthaltendes fünftes Monomer auf (Meth)acrylatbasis umfasst;
   das vierte Monomer auf (Meth)acrylatbasis in einer Menge von 15 Gewichtsteilen oder mehr und 25 Gewichtsteilen oder weniger, bezogen auf 100 Gewichtsteile des Harzsirups auf Urethan(meth)acrylatbasis, enthalten ist, und
   das fünfte Monomer auf (Meth)acrylatbasis in einer Menge von 5 Gewichtsteilen oder mehr und 35 Gewichtsteilen oder weniger, bezogen auf 100 Gewichtsteile des Harzsirups auf Urethan(meth)acrylatbasis, enthalten ist.

2. Lichthärtbare Zusammensetzung nach Anspruch 1, wobei das Harz auf Urethan(meth)acrylatbasis ein gewichtsmittleres Molekulargewicht von 20.000 g/mol oder mehr und 50.000 g/mol oder weniger aufweist.

3. Lichthärtbare Zusammensetzung nach Anspruch 1, wobei der Harzsirup auf Urethan(meth)acrylatbasis eine Viskosität von 500 cPs oder mehr und 3.000 cPs oder weniger bei 25 °C aufweist, wobei die Viskosität dadurch gemessen wird, dass, nachdem die Zusammensetzung in einen blasenfreien Zustand geblasen wurde, 0,5 ml einer Probe unter Verwendung einer 5-ml-Spritze erhalten werden, und, während eine konstante Temperatur von 25 °C aufrechterhalten wird, die Viskosität der Probe mit einer Brookfield HB Nr. 40-Spindel für 10 Minuten gemessen wird, um einen cPs-Wert zum Zeitpunkt keiner Viskositätsänderung zu messen.

4. Lichthärtbare Zusammensetzung nach Anspruch 1, wobei das Harz auf Urethan(meth)acrylatbasis eine Carbonatwiederholungseinheit enthält, die ein Alkylen mit 1 bis 10 Kohlenstoffatomen enthält, an das mindestens eine Seitenkette mit 1 bis 3 Kohlenstoffatomen gebunden ist.

5. Lichthärtbare Zusammensetzung nach Anspruch 1, wobei das Urethanpräpolymer auf Polyalkylencarbonatbasis ein Reaktionsprodukt eines Polyols auf Polyalkylencarbonatbasis und einer Verbindung auf Diisocyanatbasis ist.

6. Lichthärtbare Zusammensetzung nach Anspruch 5, wobei eine Menge der Verbindung auf Diisocyanatbasis 10 Gewichtsteile oder mehr und 20 Gewichtsteile oder weniger, bezogen auf 100 Gewichtsteile des Polyols auf Polyalkylencarbonatbasis, beträgt.

7. Lichthärtbare Zusammensetzung nach Anspruch 1, wobei das Harz auf Urethan(meth)acrylatbasis in einer Menge von 15 Gewichtsteilen oder mehr und 35 Gewichtsteilen oder weniger, bezogen auf 100 Gewichtsteile des Harzsirups

auf Urethan(meth)acrylatbasis, enthalten ist.

8. Lichthärtbare Zusammensetzung nach Anspruch 1, wobei das zweite Monomer auf (Meth)acrylatbasis in einer Menge von 5 Gewichtsteilen oder mehr und 35 Gewichtsteilen oder weniger, bezogen auf 100 Gewichtsteile des Harzsirups auf Urethan(meth)acrylatbasis, enthalten ist.

9. Lichthärtbare Zusammensetzung nach Anspruch 1, wobei der Gesamtgehalt des vierten Monomers auf (Meth) acrylatbasis und des fünften Monomers auf (Meth)acrylatbasis 30 Gewichtsteile oder mehr und 50 Gewichtsteile oder weniger, bezogen auf 100 Gewichtsteile des Harzsirups auf Urethan(meth)acrylatbasis, beträgt.

10. Lichthärtbare Zusammensetzung nach Anspruch 1, wobei das vierte Monomer auf (Meth)acrylatbasis und das fünfte Monomer auf (Meth)acrylatbasis ein Gewichtsverhältnis von 1:0,5 bis 1:1,5 aufweisen.

11. Beschichtungsschicht, enthaltend ein gehärtetes Produkt der lichthärtbaren Zusammensetzung nach Anspruch 1.

12. Beschichtungsschicht nach Anspruch 11, wobei die Beschichtungsschicht eine Gesamtdickenvariation von 3 μm oder weniger aufweist, wobei die Gesamtdickenvariation als eine Differenz zwischen einer maximalen Dicke und einer minimalen Dicke der Beschichtungsschicht definiert ist.

13. Prozessfilm, enthaltend die Beschichtungsschicht nach Anspruch 12.

**Revendications**

1. Composition photodurcissable comprenant :

   un sirop de résine à base de (méth)acrylate d'uréthane comprenant une résine à base de (méth)acrylate d'uréthane qui est un produit de réaction d'un prépolymère d'uréthane à base-carbonate de polyalkylène ayant un groupe terminal isocyanate et d'un composé à base de (méth)acrylate contenant un groupe réactif, et un mélange de monomères à base de (méth)acrylate ;
   un composé à base de (méth)acrylate d'uréthane multifonctionnel ; et
   un composé à base de (méth)acrylate multifonctionnel,
   dans laquelle le mélange de monomères à base de (méth)acrylate comprend un premier monomère à base de (méth)acrylate contenant un groupe alkyle, un deuxième monomère à base de (méth)acrylate contenant un groupe alkyle alicyclique, un troisième monomère à base de (méth)acrylate contenant un groupe polaire fonctionnel, un quatrième monomère à base de (méth)acrylate contenant un groupe aromatique et un cinquième monomère à base de (méth)acrylate contenant un groupe polaire fonctionnel et un groupe aromatique ;
   le quatrième monomère à base de (méth)acrylate est contenu dans une quantité de 15 parties en poids ou plus et de 25 parties en poids ou moins sur la base de 100 parties en poids du sirop de résine à base de (méth)acrylate d'uréthane, et
   le cinquième monomère à base de (méth)acrylate est contenu dans une quantité de 5 parties en poids ou plus et de 35 parties en poids ou moins sur la base de 100 parties en poids du sirop de résine à base de (méth)acrylate d'uréthane.

2. Composition photodurcissable selon la revendication 1, dans laquelle la résine à base de (méth)acrylate d'uréthane a un poids moléculaire moyen en poids de 20 000 g/mol ou plus et de 50 000 g/mol ou moins.

3. Composition photodurcissable selon la revendication 1, dans laquelle le sirop de résine à base de (méth)acrylate d'uréthane a une viscosité de 500 cPs ou plus et de 3000 cPs ou moins à 25°C, dans laquelle la viscosité est mesurée en ce que, après que la composition est débullée en un état exempt de bulles, 0,5 mL d'un échantillon est obtenu en utilisant une seringue de 5 mL et, pendant qu'une température constante de 25°C est maintenue, la viscosité de l'échantillon est mesurée avec une sonde HB No. 40 de Brookfield pendant 10 minutes pour mesurer une valeur cPs au point dans le temps sans changement de la viscosité.

4. Composition photodurcissable selon la revendication 1, dans laquelle la résine à base de (méth)acrylate d'uréthane inclut une unité de répétition de carbonate contenant un alkylène ayant 1 à 10 atomes de carbone à laquelle au moins une chaîne latérale ayant 1 à 3 atomes de carbone est liée.

5. Composition photodurcissable selon la revendication 1, dans laquelle le prépolymère d'uréthane à base de carbonate de polyalkylène est un produit de réaction d'un polyol à base de carbonate de polyalkylène et d'un composé à base de diisocyanate.

6. Composition photodurcissable selon la revendication 5, dans laquelle une quantité du composé à base de diisocyanate est 10 parties en poids ou plus et 20 parties en poids ou moins sur la base de 100 parties en poids du polyol à base de carbonate de polyalkylène.

7. Composition photodurcissable selon la revendication 1, dans laquelle la résine à base de (méth)acrylate d'uréthane est contenue dans une quantité de 15 parties en poids ou plus et de 35 parties en poids ou moins sur la base de 100 parties en poids du sirop de résine à base de (méth)acrylate d'uréthane.

8. Composition photodurcissable selon la revendication 1, dans laquelle le deuxième monomère à base de (méth) acrylate est contenu dans une quantité de 5 parties en poids ou plus et de 35 parties en poids ou moins sur la base de 100 parties en poids du sirop de résine à base de (méth)acrylate d'uréthane.

9. Composition photodurcissable selon la revendication 1, dans laquelle la teneur totale du quatrième monomère à base de (méth)acrylate et du cinquième monomère à base de (méth)acrylate est 30 parties en poids ou plus et 50 parties en poids ou moins sur la base de 100 parties en poids du sirop de résine à base de (méth)acrylate d'uréthane.

10. Composition photodurcissable selon la revendication 1, dans laquelle le quatrième monomère à base de (méth) acrylate et le cinquième monomère à base de (méth)acrylate ont un rapport en poids de 1:0,5 à 1:1,5.

11. Couche de revêtement incluant un produit durci de la composition photodurcissable selon la revendication 1.

12. Couche de revêtement selon la revendication 11, dans laquelle la couche de revêtement a une variation d'épaisseur totale de 3 μm ou moins, la variation d'épaisseur totale étant définie comme une différence entre une épaisseur maximum et une épaisseur minimum de la couche de revêtement.

13. Film de processus contenant la couche de revêtement selon la revendication 12.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220076697
- KR 20220012202 A
- KR 20190007069 A
- JP 2015147700 A